# EUROPÄISCHE PATENTSCHRIFT

(11) **EP 3 538 758 B1**
(45) Veröffentlichungstag und Bekanntmachung des Hinweises auf die Patenterteilung: **01.07.2020**
(21) Anmeldenummer: 17786929.4
(22) Anmeldetag: 19.10.2017
(51) Int. Cl.: F03D 80/40

(54) **MESSSYSTEM UND VERFAHREN ZUM ERKENNEN VON EISANSATZ AN WINDENERGIEANLAGEN-ROTORBLÄTTERN**
MEASURING SYSTEM AND METHOD FOR DETECTING THE ACCUMULATION OF ICE ON THE ROTOR BLADES OF WIND TURBINES
SYSTÈME DE MESURE ET PROCÉDÉ PERMETTANT DE DÉTECTER UN GIVRAGE SUR DES PALES DE ROTOR D'ÉOLIENNE

(30) Priorität: 11.11.2016 DE 102016121604
(43) Veröffentlichungstag der Anmeldung: 18.09.2019
(73) Patentinhaber: Wobben Properties GmbH, 26607 Aurich (DE)
(72) Erfinder: GLEIßL, Jakob, 26605 Aurich (DE)
(74) Vertreter: Eisenführ Speiser
(86) Internationale Anmeldenummer: PCT/EP2017/076774
(87) Internationale Veröffentlichungsnummer: WO 2018/086841

(56) Entgegenhaltungen:
- EP-A2- 2 202 408
- DE-A1-102011 112 627

## Beschreibung

Die Erfindung betrifft das Gebiet von Windenergieanlagen, insbesondere ein Messsystem sowie ein Messverfahren zur Erkennung von Eisansatz an einem Windenergieanlagen-Rotorblatt, und eine Windenergieanlage mit diesem Messsystem.

Windenergieanlagen sind verschiedensten Umwelteinflüssen ausgesetzt. Unter bestimmten Wetterbedingungen kann es zu Eisansatz an Windenergieanlagen-Rotorblättern kommen. Es wird gewünscht, diesen Eisansatz zu erkennen, um durch die Steuerung der Windenergieanlage darauf reagieren zu können. Zu den Gefahren des Eisansatzes zählt der Eisschlag, bei dem sich Eisschollen von den Rotorblättern lösen und mit hoher Geschwindigkeit auch in großer Entfernung der Windenergieanlage auf den Boden einschlagen. Um dies zu verhindern kann die Steuerung beispielsweise die Windenergieanlage abschalten oder eine Heizung der Rotorblätter kontrollieren, um das Eis bereits im Ansatz abzutauen.

Beispielsweise wird bekanntermaßen ein sogenannter LABKO Sensor zur Eiserkennung eingesetzt. Dieser wird an einer Gondel einer Windenergieanlage montiert aber bietet nicht in jedem Fall eine sichere Erkennung von Eisansatz, da sich um den Sensor selbst eine Eishülle bildet, deren erneutes Vereisen nach Abschmelzen beobachtet wird, was als Vereisungsgefahr detektiert wird. Die Situation an dem LABKO Sensor kann jedoch von der Situation an einer Spitze eines Windenergieanlagen-Rotorblattes abweichen, die sich in einigem Abstand von dem Sensor befindet.

In anderen Fällen ist bekannt, Eisansatz durch Beobachtung von Veränderungen der Leistungskurve zu erkennen. Dieses Verfahren ermöglicht aber keine räumliche Auflösung der Veränderung über die Rotorblätter, was beispielsweise das Gegensteuern, insbesondere mittels einer Rotorblattheizung, erschwert. Außerdem ist es nicht möglich, die Veränderung der Leistungskurve von anderen Faktoren zu unterscheiden, welche die aerodynamische Wirksamkeit der Windenergieanlagen-Rotorblätter verändern.

DE 10 2011 112 627 A1 offenbart ein Verfahren zur Überwachung und/oder zum Betrieb wenigstens einer Windenergieanlage, bei dem Messgrößen, die mechanische Verformungen an der wenigstens einen Windenergieanlage charakterisieren, mittels einer Messvorrichtung erfasst und mittels einer Auswerteeinrichtung ausgewertet werden, umfasst, dass die Messgrößen durch optische Abtastung wenigstens eines Bereichs der wenigstens einen Windenergieanlage bestimmt werden, und dass die Auswerteeinrichtung aus den Messgrößen eine mechanische Belastung der wenigstens einen Windenergieanlage ermittelt und/oder auf Grundlage der Messgrößen Ansteuergrößen an eine Regeleinrichtung der wenigstens einen Windenergieanlage bereitstellt. Entsprechende Vorrichtungen und Anordnungen sind ebenfalls Gegenstand der vorliegenden Erfindung.

DE 659 30 831 T2 offenbart ein Verfahren zur Erkennung des Vorhandenseins einer polarisationsändernden Substanz auf einer Fläche, die spiegelnd Licht reflektiert, bestehend aus den Schritten: Senden von Licht über einen Sendepfad auf die Oberfläche; Abwechselndes Empfangen des gesendeten Lichts über einen Empfangspfad für das gesendete Licht von der Oberfläche und der Substanz in einem optischen Isolatorzustand und einem optischen Nicht-Isolatorzustand; Messen einer ersten Intensität von in dem optischen Nicht-Isolatorzustand empfangenem Licht; Messen einer zweiten Intensität von in dem optischen Isolatorzustand empfangenem Licht. Die Schritte des Messens der ersten und zweiten Intensität empfangenen Lichts beinhalten das Bestimmen von Werten der ersten und zweiten Intensität empfangenen Lichts. Referenzdaten werden aufgestellt indem ein Verhältnis als eine Funktion der ersten Intensität von Licht bestimmt wird, wenn die Oberfläche eine bekannte Oberfläche ist, wobei die polarisationsänderende Substanz auf dieser bekannten Oberfläche nicht vorhanden ist, wobei der Schritt des Aufstellens von Referenzdaten weiter einen Schwellwert der Funktion besitzt und der Schwellwert eine Differenz zwischen verschiedenen Bedingungen der Oberfläche darstellt.

Angesichts der vorgenannten Schwierigkeiten lag der vorliegenden Erfindung somit die Aufgabe zugrunde, ein verbessertes Messsystem sowie ein Messverfahren zur Erkennung von Eisansatz an einem Windenergieanlagen-Rotorblatt bereitzustellen. Ferner war es eine Aufgabe, ein Messsystem und ein Messverfahren bereitzustellen, die eine sichere und insbesondere räumlich aufgelöste Erkennung von Eisansatz an einem Windenergieanlagen-Rotorblatt im Betrieb ermöglicht.

Die Aufgabe wird erfindungsgemäß durch das Messsystem zur Erkennung von Eisansatz an einem Windenergieanlagen-Rotorblatt nach Anspruch 1 gelöst. Die Aufgabe wird erfindungsgemäß ferner durch ein Verfahren zur Erkennung von Eisansatz an einem Windenergieanlagen-Rotorblatt nach Anspruch 13 gelöst. Weitere vorteilhafte Ausführungsformen sind in den Unteransprüchen ausgeführt.

In einem Aspekt wird somit ein Messsystem zur Erkennung von Eisansatz an einem Windenergieanlagen-Rotorblatt bereitgestellt. Das Messsystem umfasst eine Sendeeinheit zum Emittieren von Wellen in Richtung des Windenergieanlagen-Rotorblattes, eine Empfangseinheit zum Empfangen von an dem Windenergieanlagen-Rotorblatt reflektierten Wellen, und eine Auswerteeinheit zum Auswerten der reflektierten Wellen zur Erkennung von Eisansatz. Die Sendeeinheit ist eingerichtet, Wellen mit einer Wellenlänge zu emittieren, die einer Gitterschwingung von Eiskristallen entspricht.

Nachdem die Auswerteeinheit von dem Windenergieanlagen-Rotorblatt reflektierte Wellen zur Erkennung von Eisansatz auswertet, kann ein Eisansatz nicht nur an der Windenergieanlage sondern direkt am Windenergieanlagen-Rotorblatt bestimmt werden. Nachdem die Sendeeinheit Wellen einer Wellenlänge, die einer Gitterschwingung von Eiskristallen entspricht, emittieren kann, unterscheiden sich die von dem Windenergieanlagen-Rotorblatt reflektierten Wellen in Abhängigkeit davon, ob sich Eiskristalle an der Oberfläche des Windenergieanlagen-Rotorblattes befinden oder nicht. Vorzugsweise ist die Empfangseinheit auch eingerichtet, Wellen mit einer Wellenlänge zu empfangen, die einer Gitterschwingung von Eiskristallen entspricht.

Vorzugsweise umfasst der Begriff der Wellen Schallwellen sowie elektromagnetische Wellen. Elektromagnetische Wellen werden auch als elektromagnetische Strahlung bezeichnet.

In einer Ausführungsform weist die Sendeeinheit eine Akustiksendeeinheit zum Emittieren von Schallwellen und/oder eine Optiksendeeinheit zum Emittieren von elektromagnetischer Strahlung auf.

Vorzugsweise ist die Akustiksendeeinheit ein elektroakustischer Generator, der zum Erzeugen von Schallwellen mit einer vorbestimmten Frequenz, das heißt Wellenlänge, geeignet ist. Während in einer bevorzugten Ausführungsform die Akustiksendeeinheit zum Erzeugen und Emittieren von Schallwellen reiner Frequenz eingerichtet ist, kann die Akustiksendeeinheit in anderen Ausführungsformen auch eine Überlagerung von Schallwellen mit unterschiedlichen Frequenzen erzeugen und emittieren. Die Optiksendeeinheit ist vorzugsweise eine Lichtquelle, beispielsweise eine Laserlichtquelle oder ähnliches, die zum Erzeugen und Emittieren von elektromagnetischer Strahlung geeignet ist. Selbstverständlich sind auch andere, bekannte, Akustiksendeeinheiten bzw. Optiksendeeinheiten in anderen Ausführungsformen vorteilhaft einsetzbar.

In einer Ausführungsform ist die Auswerteeinheit eingerichtet, Eisansatz basierend auf von dem Windenergieanlagen-Rotorblatt absorbierten Wellen zu erkennen. Die Auswerteeinheit kann somit erkennen, welche Wellen von dem Windenergieanlagen-Rotorblatt nicht reflektiert wurden und basierend darauf auf einen Eisansatz auf dem Windenergieanlagen-Rotorblatt schließen.

In einer Ausführungsform ist die Auswerteeinheit eingerichtet, Eisansatz basierend auf selektiv durch Gitterschwingungen des Eiskristalls absorbierten Wellen zu erkennen. Vorzugsweise emittiert die Sendeeinheit Strahlung bzw. Wellen in dem Wellenlängenbereich, der wenigstens einer Mode der Gitterschwingungen des Eiskristalls entspricht. Somit kann von der Auswerteeinheit bestimmt werden, ob Wellen mit dieser Wellenlänge absorbiert wurden, was ein Indikator für Eisansatz auf dem Windenergieanlagen-Rotorblatt ist, oder nicht. Vorzugsweise werden durch die absorbierten Wellen akustische oder optische Phononen des Eiskristalls angeregt.

In einer Ausführungsform ist die Auswerteeinheit eingerichtet, Eisansatz durch Vergleich der Absorption zwischen Eis und Wasser zu erkennen. Insbesondere kann demnach durch die zeitliche Veränderung der Absorptionsraten von Eis und Wasser bestimmt werden, ob es zu Eisbildung kommt. Darüber hinaus kann auch die Rate der Eisbildung bestimmt werden, was die Gefährlichkeit der Vereisungsbedingungen abschätzbar macht. Außerdem kann durch die Bestimmung der Wassermenge, was durch Absorption von Wellen bzw. Strahlung mit für Wasser spezifischer Wellenlänge möglich ist, bestimmt werden, wie viel Potenzial für weitere Eisbildung zur Verfügung steht.

In einer Ausführungsform ist die Auswerteeinheit eingerichtet, Eisansatz basierend auf Wellen der Wellenlängen 1 µm bis 100 µm zu erkennen. Dieser Bereich von Wellenlängen eignet sich besonders zur Unterscheidung von flüssigem Wasser und Eis. In einer bevorzugten Ausführungsform ist die Auswerteeinheit eingerichtet, Eisansatz basierend auf Wellen mit etwa 3,1 µm bzw. etwa 25 µm zu erkennen. Mit dem Begriff etwa soll im Folgenden ein Bereich von 10 % oberhalb und unterhalb des jeweiligen Wellenlängenwertes bezeichnet werden. Die beispielhaft angeführten Wellenlängen sind aber natürlich nicht sämtliche für die Erkennung von Eisansatz geeigneten Wellenlängen und auch andere sind von Fachleuten auf dem Gebiet problemlos einsetzbar.

In einer Ausführungsform ist die Auswerteeinheit ferner eingerichtet, eine Schichtdicke des Eisansatzes zu erfassen.

Je dicker eine Schichtdicke des Eisansatzes auf der Oberfläche des Windenergieanlagen-Rotorblattes ist, desto größer ist der absorbierte Anteil der Wellen mit Wellenlänge der Gitterschwingungen im Vergleich zu dem Anteil der Wellen dieser Wellenlänge, der reflektiert wird. Mit hinreichender Kalibrierung bzw. Messgenauigkeit ist es somit nicht nur möglich zu detektieren, dass Eisansatz vorliegt, sondern auch, mit welchem Ausmaß der Eisansatz auftritt.

In einer Ausführungsform ist die Sendeeinheit eingerichtet, Schallwellen und/oder elektromagnetische Wellen der Wellenlänge im Bereich von 1 µm bis 100 µm zu emittieren. Die Sendeeinheit ist somit vorteilhafterweise eingerichtet, Schallwellen und/oder elektromagnetische Wellen genau der Wellenlänge zu emittieren, die den Gitterschwingungen des Eiskristalls entspricht.

In einer Ausführungsform ist die Auswerteeinheit eingerichtet, eine Laufzeit zwischen einem Emittieren der Welle und einem Empfangen der reflektierten Welle zu bestimmen.

Jede Welle breitet sich im umgebenen Medium mit einer bestimmten Geschwindigkeit aus. Entsprechend lässt sich die Ausbreitungsgeschwindigkeit aus der Art der Welle sowie dem umgebenden Medium bestimmen. Indem die Auswerteinheit demnach die Laufzeit sowie die Ausbreitungsgeschwindigkeit der Welle bestimmen kann, ist es möglich, den Ort zu bestimmen, an dem die Welle reflektiert wurde. Somit ist die Auswerteeinheit in vorteilhafter Weise geeignet, eine Ortsauflösung, insbesondere eine Entfernungsauflösung, basierend auf der bestimmten Laufzeit zu implementieren.

Vorzugsweise ist die Sendeeinheit eingerichtet, impulsartige Wellenpakete zu bestimmten Zeitpunkten zu emittieren. Dadurch kann gewährleistet werden, dass die Auswerteeinheit die von der Empfangseinheit empfangenen Wellen emittierten Wellen zuordnen kann, zu einem ganz bestimmten Zeitpunkt emittiert wurden. Mit anderen Worten, nachdem der Zeitpunkt der Emission klar bestimmbar ist, kann der Empfangszeitpunkt auf den klar bestimmbaren Emissionszeitpunkt bezogen werden, und die Laufzeit als Differenz davon bestimmt werden. In anderen Ausführungsformen kann die Sendeeinheit auch zum kontinuierlichen Emittieren von Wellen ausgestattet sein. In diesem Fall wird bevorzugt, dass die Sendeeinheit andere Modulationen vornimmt, die ein Bestimmen des Emissionszeitpunktes ermöglichen, wie beispielsweise eine Frequenz- oder eine Amplitudenmodulation.

Vorzugsweise ist die Auswerteinheit eingerichtet, eine Temperatur der umgegebenen Luft zu bestimmen. Es ist bekannt, dass insbesondere die Ausbreitungsgeschwindigkeit von Schallwellen von der Temperatur der umgegebenen Luft abhängen. Somit ist die Auswerteeinheit vorzugsweise eingerichtet, aus der bestimmten Temperatur die Ausbreitungsgeschwindigkeit der Wellen, insbesondere der Schallwellen, abzuleiten. Damit ermöglicht das Messsystem eine genauere räumliche Zuordnung, da die Laufzeit mit einer präzisen Ausbreitungsgeschwindigkeit der Welle kombiniert wird. Vorzugsweise ist die Auswerteeinheit ferner eingerichtet, insbesondere für Schallwellen, den Zusammenhang zwischen Frequenz und Wellenlänge basierend auf der Ausbreitungsgeschwindigkeit zu verknüpfen.

In einer Ausführungsform sind die Sendeeinheit und die Empfangseinheit eingerichtet, an einem nicht mit dem Rotor rotierenden Punkt, insbesondere einem Turm oder einer Gondel der Windenergieanlage, montiert zu werden.

Die Anordnung an einem nicht rotierenden Punkt der Windenergieanlage ermöglicht eine gute Wartbarkeit des Messsystems, da es gut zugänglich ist. Das erfindungsgemäße Messsystem ermöglicht es somit, Eisansatz an Windenergieanlagen-Rotorblättern zu detektieren, ohne das Messsystem in Kontakt mit den schwierig zugänglichen Windenergieanlagen-Rotorblättern bringen zu müssen. Außerdem ist eine Wartung des Messsystems auch bei Betrieb der Windenergieanlage möglich.

Bevorzugt sind die Sendeeinheit und die Empfangseinheit eingerichtet, an der Gondel der Windenergieanlage montiert zu werden. In dieser Ausführungsform kann die Sendeeinheit eingerichtet sein, Wellen ausgehend von der Gondel der Windenergieanlage radial nach außen in Richtung der Spitzen der Windenergieanlagenrotorblätter zu emittieren. Eine Laufzeit zwischen dem Emittieren der Welle und dem Empfangen der reflektierten Welle entspricht somit einem eindeutigen radialen Abstand der Reflektionsposition auf dem Rotorblatt von dem Messsystem. In zeitlicher Abfolge werden somit reflektierte Wellen von zunehmend weiter entfernten Punkten des Windenergieanlagen-Rotorblattes empfangen. Dadurch, dass sich das Windenergieanlagen-Rotorblatt bezüglich des Messsystems dreht, das heißt, nicht die ganze Zeit sondern nur für einen kurzen Zeitraum als Reflektionsquelle zur Verfügung steht, können sich reflektierte Wellen, die von einem nahe an der Rotornarbe liegenden Bereich des Rotorblattes reflektiert werden, nicht mit Wellen überlappen, die von weiter entfernten Orten des Windenergieanlagen-Rotorblattes reflektiert werden. Aus ebenfalls diesem Grund ist es in dieser Ausführungsform nicht nötig, dass die Sendeeinheit die Emission von Wellen pulsiert und/oder moduliert, da die Reflektion an dem Windenergien-Rotorblatt in geeigneter Weise durch die Drehung des Rotors moduliert ist. Diese Ausführungsform ermöglicht demnach eine besonders einfache Ausführung des Messsystems. In einer Ausführungsform weist das Messsystem weiter eine Sendefokussiereinheit auf, die dazu eingerichtet ist, die von der Sendeeinheit emittierten Wellen zu fokussieren, insbesondere auf einen Punkt oder Bereich des Windenergieanlagen-Rotorblattes zu fokussieren.

Die Sendefokussiereinheit ist vorzugsweise eine optische Linse oder ein anderes geeignetes Instrument, das ein Fokussieren eines Strahles elektromagnetischer Strahlung ermöglicht. In einer besonders bevorzugten Ausführungsform ist die Fokussiereinheit bewegbar, das heißt, sie kann an verschiedene Bereiche des Windenergieanlagen-Rotorblattes angepasst werden. Dank der Fokussierungseinheit ist es möglich, eine räumlich aufgelöste Messung von Eisansatz an dem Windenergieanlagen-Rotorblatt umzusetzen.

In einer Ausführungsform weist das Messsystem weiter eine Empfangsfokussiereinheit auf, die dazu eingerichtet ist, den Empfang von an dem Windenergieanlagen-Rotorblatt reflektierten Wellen zu fokussieren. Bevorzugt weist die Empfangsfokussiereinheit ein Richtmikrofon oder ein Hohlspiegelmikrofon zur akustischen Fokussierung auf einen Punkt oder Bereich des Windenergieanlagen-Rotorblattes auf. Die Empfangsfokussiereinheit ermöglicht somit eine räumliche Auflösung von an dem Windenergieanlagen-Rotorblatt reflektierten Wellen. Insbesondere ist die Empfangsfokussiereinheit eingerichtet, die Fokussierung auf verschiedene Punkte oder Bereiche des Windenergieanlagen-Rotorblattes einzustellen.

In einem Aspekt wird eine Windenergieanlage mit einem erfindungsgemäßen Messsystem bereitgestellt. Indem die Windenergieanlage das erfindungsgemäße Messsystem einsetzt, ist die Erkennung von Eisansatz an den Windenergieanlagen-Rotorblättern verbessert.

In einer Ausführungsform sind die Sendeeinheit und die Empfangseinheit des Messsystems an einem Turm der Windenergieanlage montiert.

Die Montage an einem Turm der Windenergieanlage erlaubt eine einfache Wartung und einfache Montage. Auch Nachrüstungen einer Windenergieanlage mit dem Messsystem sind einfach möglich. Zuzüglich gestattet die Montage an dem Turm, dass ein Abstand zwischen Messsystem und jedem Bereich des Windenergieanlagen-Rotorblattes kleiner ist, als beispielsweise in dem Fall, in dem das Messsystem an der Gondel der Windenergieanlage montiert ist.

In einer alternativen Ausführungsform ist das Messsystem, beziehungsweise mindestens die Sendeeinheit und Empfangseinheit des Messsystems, an der Gondel der Windenergieanlage montiert. Um auch zu den entfernten Spitzen der Windenergierotorblätter eine gute Messgenauigkeit zu haben, weist das Messsystem in dieser Ausführungsform vorzugsweise wenigstens eine Sende- und/oder Empfangsfokussiereinheit auf. Allerdings kann das Messsystem die Fokussierungseinheit natürlich auch dann aufweisen, wenn es an anderen Stellen, beispielsweise an dem Turm der Windenergieanlage montiert ist.

In einer Ausführungsform weist die Windenergieanlage ferner eine Verstelleinheit auf, die dazu eingerichtet ist, die Sendeeinheit und die Empfangseinheit entlang des Turmes in der Höhenrichtung und/oder der Azimutrichtung zu verfahren.

Indem die Windenergieanlage eine Verstelleinheit aufweist, mittels derer die Sendeeinheit und die Empfangseinheit des Messsystems entlang des Turmes entweder in der Höhenrichtung und/oder in der Azimutrichtung verfahren werden kann, kann die Sendeeinheit und die Empfangseinheit entsprechend den aktuellen Windverhältnissen und Anforderungen an das Messsystem bewegt werden.

Beispielsweise können die Sendeeinheit und die Empfangseinheit näher in den Bereich der Spitzen der Windenergieanlagen-Rotorblätter verfahren werden, indem die Verstelleinheit eine an dem Turm tiefer gelegene Position ansteuert. Wird die Windenergieanlage dem Wind durch eine Azimutdrehung nachgeführt, so kann die Verstelleinheit die Sendeeinheit und Empfangseinheit ebenso in Azimutrichtung um den Turm herum nachstellen. In einer Ausführungsform weist die Verstelleinheit eine vertikale Schiene auf, mittels derer die Sendeeinheit und die Empfangseinheit in der Höhe entlang des Turmes verschoben werden können. Eine Verstellung der Sendeeinheit und der Empfangseinheit in Azimutrichtung kann in einer Ausführungsform ebenso durch eine Schiene in Horizontalrichtung um den Turm der Windenergieanlage realisiert werden. In anderen Ausführungsformen ist es ausreichend, dass die Sendeeinheit und die Empfangseinheit in der Achse parallel zur Turmachse gedreht werden, ohne azimutal um den Turm verlagert zu werden. Vorzugsweise ist der dann eingeschränkte Messbereich in Azimutrichtung in Übereinstimmung mit dem Bereich, dem die häufigste Windrichtung entspricht.

In einem weiteren Aspekt wird ein Verfahren zur Erkennung von Eisansatz an einem Windenergieanlagen-Rotorblatt vorgeschlagen. Das Verfahren umfasst: Emittieren von Wellen auf das Windenergieanlagen-Rotorblatt mit einer Wellenlänge, die einer Gitterschwingung von Eiskristallen entspricht; Empfangen von an dem Windenergieanlagen-Rotorblatt reflektierten Wellen, und Auswerten der reflektierten Wellen zur Erkennung von Eisansatz. Die Wellen sind vorzugsweise Schallwellen und/oder elektromagnetische Wellen.

Das erfindungsgemäße Verfahren erzielt alle Vorteile, die bereits mit Bezug auf das erfindungsgemäße Messsystem beschrieben wurden. Ebenso sind alle für das Messsystem beschriebenen Vorteile und Ausführungsformen in analoger Weise auch auf das Verfahren anwendbar.

In einem weiteren Aspekt wird ein Verfahren zum Betrieb einer erfindungsgemäßen Windenergieanlage bereitgestellt. Das Verfahren umfasst ein Anbringen einer Sendeeinheit und/oder einer Empfangseinheit eines erfindungsgemäßen Messsystems an einem Turm und/oder einer Gondel der Windenergieanlage.

Das erfindungsgemäße Messsystem kann gemäß diesem Aspekt der vorliegenden Erfindung auch nachgerüstet bzw. gewartet werden. Insbesondere kann zu einem späteren Zeitpunkt ein bereits bestehender Turm bzw. eine Gondel einer Windenergieanlage mit einem Messsytem ausgestattet werden, indem mindestens eine Sendeeinheit und/oder eine Empfangseinheit an den Turm bzw. der Gondel der Windenergieanlage angebracht werden.

Die Erfindung wird im Folgenden anhand von bevorzugten Ausführungsbeispielen unter Bezugnahme auf die beiliegenden Figuren näher erläutert. Hierbei zeigen:
- Fig. 1: eine Windenergieanlage schematisch in einer perspektivischen Ansicht,
- Fig. 2: ein erfindungsgemäßes Messsystem an einer Windenergieanlage in einer perspektivischen Ansicht,
- Fig. 3: schematisch und exemplarisch einen Aufbau des erfindungsgemäßen Messsystems und
- Fig. 4: schematisch und exemplarisch ein weiteres Ausführungsbeispiel des erfindungsgemäßen Messsystems mit zeitaufgelöster Messung.

Nachfolgend können identische Bezugszeichen ähnliche, aber nicht identische Elemente zeigen. Außerdem können gleiche Elemente in unterschiedlichem Maßstab dargestellt sein.

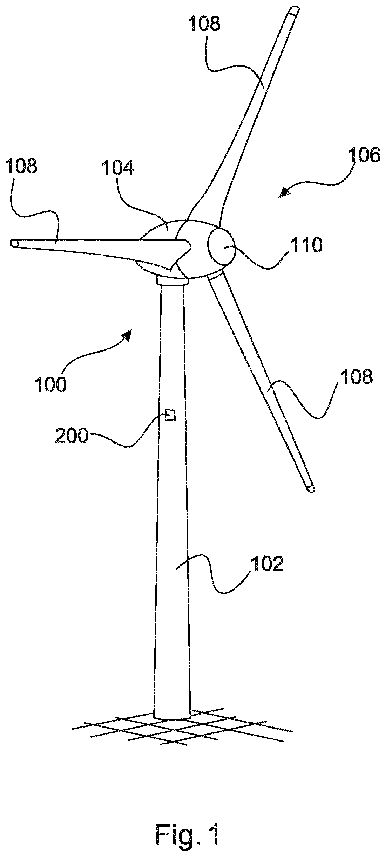

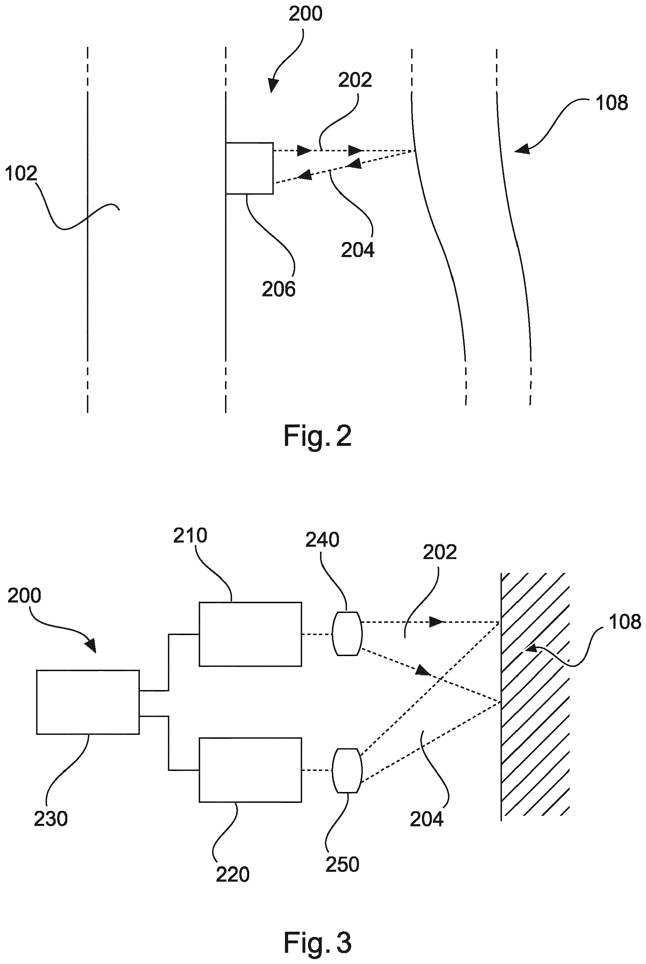

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird in Betrieb durch den Wind in eine Drehbewegung versetzt und treibt dadurch einen Generator 1 (Figur 2) in der Gondel 104 an.

An dem Turm 102 ist ein erfindungsgemäßes Messsystem 200 angebracht gezeigt. In anderen Beispielen kann das Messsystem 200 auch an anderen Stellen der Windenergieanlage, beispielsweise an einer Außenseite der Gondel 104 angebracht sein. In noch weiteren Ausführungsbeispielen kann das Messsystem 200 auch entfernt von der Windenergielage, beispielsweise am Boden aufgestellt sein.

Fig. 2 zeigt das an dem Turm 102 montierte Messsystem 200, wie es in Fig. 1 gezeigt ist, vergrößert. Das Messsystem 200 weist ein Gehäuse 206 auf, das die wesentlichen Komponenten (vergleiche Fig. 3) beinhaltet. Das Gehäuse 206 ist in diesem Ausführungsbeispiel an einer Seitenfläche des Turms 102 montiert. Das Gehäuse 206 kann in anderen Ausführungsbeispielen auch anders ausgeführt und beispielsweise an anderen Stellen der Windenergieanlage 100 montiert sein.

Ausgehend von dem Gehäuse 206 wird eine emittierte Welle 202 in Richtung des Rotorblattes 108 gerichtet. An der Oberfläche des Rotorblattes 108 wird die emittierte Welle 202 reflektiert und breitet sich als reflektierte Welle 204 in Richtung des Gehäuses 206 auf. Obwohl in der beispielhaften Darstellung der Fig. 2 sowohl die emittierte Welle 202 als auch die reflektierte Welle 205 nur durch eine einzige Linie dargestellt sind, ist es selbstverständlich, dass je nach Art und Ursprung der Welle die tatsächliche Ausbreitungscharakteristik abweicht. Beispielsweise in dem Fall von akustischen, also Schallwellen, werden sich sowohl die emittierte Welle 202 als auch die reflektierte Welle 204 kugelförmig von dem jeweiligen Punkt der Erzeugung ausbreiten. Dennoch wird auch in diesem Fall zumindest ein Teil der reflektierten Welle 204 seinen Weg zurück zu dem Messsystem 200 bzw. insbesondere dem Gehäuse 206 finden.

Fig. 3 zeigt schematisch und exemplarisch einen Aufbau des erfindungsgemäßen Messsystems 200 ohne Gehäuse 206. Das Messsystem 200 weist eine Sendeeinheit 210 zum Emittieren von Wellen in Richtung des Windenergieanlagen-Rotorblattes 108, eine Empfangseinheit 220 zum Empfangen von an dem Windenergieanlagen-Rotorblatt 108 reflektierten Wellen und eine Auswerteeinheit 230 zum Auswerten der reflektierten Wellen zur Erkennung von Eisansatz auf.

In dem in Fig. 3 gezeigten Beispiel umfasst das Messsystem 200 weiter eine Sendefokussiereinheit 240 und eine Empfangsfokussiereinheit 250. In diesem Ausführungsbeispiel sind sowohl die Sendefokussiereinheit 240 als auch die Empfangsfokussiereinheit 250 als optische Linsen zur Fokussierung von elektromagnetischen Strahlen dargestellt. Entsprechend sind auch die emittierte Welle 202 und die reflektiere Welle 204 schematisch als Strahl von elektromagnetischen Strahlen bzw. Wellen dargestellt. Eine entsprechende Anwendung findet natürlich auch auf andere Formen von Wellen, insbesondere Schallwellen, statt. Anstelle der optischen Fokussiereinheiten 2040, 250 sind dann vorzugsweise akustische Fokussierelemente, beispielsweise Richtmikrofone oder Ähnliches vorgesehen.

Die Sendeinheit 210 ist eingerichtet, Wellen 202 mit einer Wellenlänge zu emittieren, die einer Gitterschwingung von Eiskristallen entspricht. Entsprechend können die Wellen 202 dann, wenn sie auf die Oberfläche des Windenergieanlagen-Rotorblattes 108 treffen, von sich eventuell dort befindlichen Eiskristallen absorbiert werden und dadurch nicht von dem Windenergieanlagen-Rotorblatt 108 reflektiert werden. Entsprechend unterscheiden sich die reflektierten Wellen 204 je nachdem, ob Eisansatz an dem Windenergieanlagen-Rotorblatt 108 vorliegt oder nicht. Diese Änderung der Charakteristik der reflektierten Welle 204 wird von der Auswerteeinheit 230 zum Detektieren von Eisansatz verwendet.

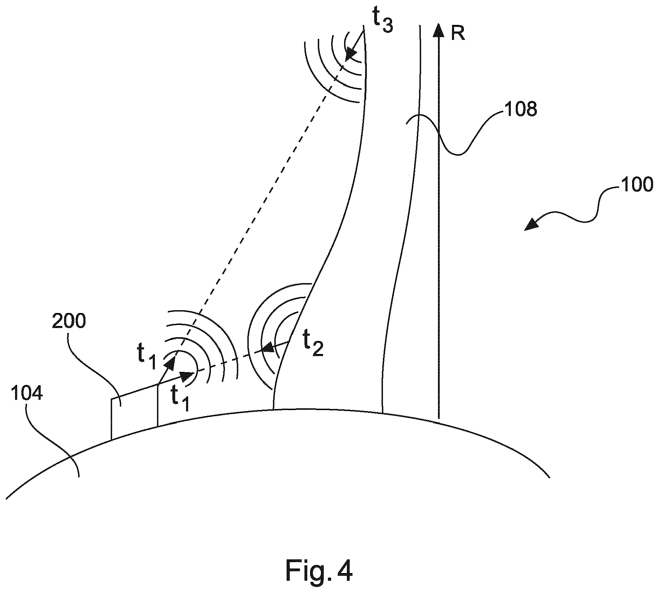

Fig. 4 zeigt schematisch und exemplarisch ein weiteres Ausführungsbeispiel des erfindungsgemäßen Messsystems 200, das in diesem Beispiel eine ortsaufgelöste Messung basierend auf Laufzeiten von elektroakustischen bzw. Schallwellen zeigt. Das Messsystem 200 ist in diesem Ausführungsbeispiel auf eine Oberfläche der Gondel 104 der Windenergieanlage 100 montiert. Zu einem Zeitpunkt t1 wird von dem Messsystem 200 eine Welle in Richtung des Windenergieanlagen-Rotorblattes 108 emittiert. Die in diesem Beispiel gezeigte Schallwelle breitet sich kugelförmig aus, was in der Umgebung des Messsystems 200 durch drei konzentrische Kreissegmente illustriert ist. Die Welle trifft an unterschiedlichen Punkten des Rotorblattes 108 zu unterschiedlichen Zeitpunkten auf. Desto weiter der Punkt auf dem Rotorblatt 108 von der Gondel 104 in einer Radialrichtung R entfernt ist, desto weiter ist die Wegstrecke zwischen dem System 200 und dem entsprechenden Punkt. Entsprechend verlängert sich auch die Laufzeit der Schallwelle zwischen dem Messsystem 200 und dem Punkt, an dem die Welle reflektiert wird. Beispielhaft sind in der Zeichnung zwei Positionen auf dem Rotorblatt 108 gezeigt, an denen die Schallwelle zu Zeitpunkten t2 bzw. t3 reflektiert wird. Der Zeitpunkt t3 liegt nach dem Zeitpunkt t2. Natürlich wird die Schallwelle nicht nur an den zu den Zeitpunkten t2 und t3 gehörenden Punkten, sondern kontinuierlich auch an allen dazwischenliegenden Punkten reflektiert. Die reflektierte Welle muss die entsprechende Wegstrecke erneut zurücklegen, so dass sich ebenfalls unterschiedliche Laufzeiten für die Rückstrecke unterschiedlicher Reflektionspunkte ergeben.

Wann sich das Rotorblatt 108 um die Gondel 104 dreht, können Wellen nicht zu jeder Zeit von dem Rotorblatt 108 reflektiert werden, sondern nur dann, wenn sich das Rotorblatt 108 in einer dem Messsystem 200 entsprechenden Position befindet. Mit anderen Worten, nur während eines geringen Bruchteils der Umlaufperiode des Rotorblattes 108 erreichen das Rotorblatt 108 Wellen des Messsytems 200 bzw. werden von dem Rotorblatt 108 Wellen in Richtung des Messsystems 200 reflektiert. Aus diesem Grund ist es nicht nötig, dass die Sendeeinheit 210 des Messsystems 200 das Emittieren der Wellen pulsiert und/oder moduliert, da die Reflektion durch das Rotorblatt 108 bereits in geeigneter Weise moduliert, um eine Überlagerung der reflektierten Wellen zu verhindern.

## Patentansprüche

1. Messsystem (200) zur Erkennung von Eisansatz an einem Windenergieanlagen-Rotorblatt (108), umfassend
- eine Sendeeinheit (210) zum Emittieren von Wellen in Richtung des Windenergieanlagen-Rotorblattes (108),
- eine Empfangseinheit (220) zum Empfangen von an dem Windenergieanlagen-Rotorblatt (108) reflektierten Wellen, und
- eine Auswerteeinheit (230) zum Auswerten der reflektierten Wellen zur Erkennung von Eisansatz,
**dadurch gekennzeichnet, dass** die Sendeeinheit (210) eingerichtet ist, Wellen mit einer Wellenlänge zu emittieren, die einer Gitterschwingung von Eiskristallen entspricht.

2. Messsystem (200) nach Anspruch 1, wobei die Sendeeinheit (210) eine Akustiksendeeinheit zum Emittieren von Schallwellen und/oder eine Optiksendeeinheit zum Emittieren von elektromagnetischer Strahlung aufweist.

3. Messsystem (200) nach Anspruch 1 oder 2, wobei die Auswerteeinheit (230) eingerichtet ist, Eisansatz basierend auf von dem Windenergieanlagen-Rotorblatt (108) absorbierten Wellen zu erkennen.

4. Messsystem (200) nach Anspruch 3, wobei die Auswerteeinheit (230) eingerichtet ist, Eisansatz basierend auf selektiv durch Gitterschwingungen des Eiskristalls absorbierten Wellen zu erkennen.

5. Messsystem (200) nach Anspruch 4, wobei die Auswerteeinheit (230) eingerichtet ist, Eisansatz durch Vergleich der Absorption zwischen Eis und Wasser zu erkennen.

6. Messsystem (200) nach Anspruch 4 oder 5, wobei die Auswerteeinheit (230) eingerichtet ist, Eisansatz basierend auf Wellen der Wellenlängen im Bereich von 1 µm bis 100 µm, insbesondere von 2 µm bis 50 µm und besonders bevorzugt von etwa 3 µm und/oder etwa 25 µm zu erkennen.

7. Messsystem (200) nach einem der vorstehenden Ansprüche, wobei die Auswerteeinheit (230) eingerichtet ist, eine Laufzeit zwischen Emittieren der Welle und Empfangen der reflektierten Welle zu bestimmen.

8. Messsystem (200) nach einem der vorstehenden Ansprüche, wobei die Auswerteeinheit (230) ferner eingerichtet ist, eine Schichtdicke des Eisansatzes zu erfassen.

9. Messsystem (200) nach einem der vorstehenden Ansprüche, wobei die Sendeeinheit (210) und die Empfangseinheit (220) eingerichtet sind, an einem nicht mit dem Rotor rotierenden Punkt, insbesondere einem Turm (102) oder einer Gondel (104) der Windenergieanlage, montiert zu werden.

10. Messsystem (200) nach einem der vorstehenden Ansprüche, das weiter eine Sendefokussiereinheit (240) aufweist, die dazu eingerichtet ist, die von der Sendeeinheit emittierten Wellen zu fokussieren, insbesondere auf einen Punkt oder Bereich des Windenergieanlagen-Rotorblattes zu fokussieren.

11. Windenergieanlage (100) mit einem Messsystem (200) nach einem der Ansprüche 1-10.

12. Windenergieanlage (100) nach Anspruch 11, wobei die Sendeeinheit (210) und die Empfangseinheit (220) des Messsystems (200) an einem Turm (102) oder einer Gondel (104) der Windenergieanlage (100) montiert sind.

13. Windenergieanlage (100) nach Anspruch 12, die ferner eine Verstelleinheit aufweist, die dazu eingerichtet ist, die Sendeeinheit (210) und die Empfangseinheit (210) entlang des Turmes (102) in der Höhenrichtung und/oder der Azimutrichtung zu verfahren.

14. Verfahren zur Erkennung von Eisansatz an einem Windenergieanlagen-Rotorblatt (108), umfassend
- Emittieren von Wellen, insbesondere von Schallwellen und/oder elektromagnetischen Wellen, auf das Windenergieanlagen-Rotorblatt (108) mit einer Wellenlänge, die einer Gitterschwingung von Eiskristallen entspricht,
- Empfangen von an dem Windenergieanlagen-Rotorblatt (108) reflektierten Wellen, und
- Auswerten der reflektierten Wellen zur Erkennung von Eisansatz.

15. Verfahren zum Betrieb einer Windenergieanlage (100) nach einem der Ansprüche 11 bis 13, umfassend ein Anbringen einer Sendeeinheit (210) und/oder einer Empfangseinheit (220) eines Messsystems (200) nach einem der Ansprüche 1 bis 10 an einem Turm (102) und/oder einer Gondel (104) der Windenergieanlage (100).

## Claims

1. A measuring system (200) for detecting ice build-up on a wind turbine rotor blade (108), comprising
- a transmitter unit (210) for emitting waves in the direction of the wind turbine rotor blade (108),
- a receiving unit (220) for receiving waves reflected from the wind turbine rotor blade (108), and
- an evaluation unit (230) for evaluating the reflected waves to detect ice build-up,
**characterized in that** the transmitting unit (210) is adapted to emit waves having a wavelength corresponding to a lattice vibration of ice crystals.

2. The measuring system (200) according to claim 1, wherein the transmitting unit (210) comprises an acoustic transmitting unit for emitting sound waves and/or an optical transmitting unit for emitting electromagnetic radiation.

3. The measuring system (200) according to claim 1 or 2, wherein the evaluation unit (230) is arranged to detect ice build-up based on waves absorbed by the wind turbine rotor blade (108).

4. The measuring system (200) according to claim 3, wherein the evaluation unit (230) is arranged to detect ice build-up based on waves selectively absorbed by lattice vibrations of the ice crystal.

5. The measuring system (200) according to claim 4, wherein the evaluation unit (230) is arranged to detect ice build-up by comparing the absorption between ice and water.

6. The measuring system (200) according to claim 4 or 5, wherein the evaluation unit (230) is arranged to detect ice build-up based on waves of wavelengths in the range from 1 µm to 100 µm, in particular from 2 µm to 50 µm and particularly preferably of about 3 µm and/or about 25 µm.

7. The measuring system (200) according to one of the preceding claims, wherein the evaluation unit (230) is arranged to determine a time of flight between emitting the wave and receiving the reflected wave.

8. The measuring system (200) according to one of the preceding claims, wherein the evaluation unit (230) is further adapted to detect a layer thickness of the ice build-up.

9. The measuring system (200) according to one of the preceding claims, wherein the transmitting unit (210) and the receiving unit (220) are arranged to be mounted at a point not rotating with the rotor, in particular a tower (102) or a nacelle (104) of the wind turbine.

10. The measuring system (200) according to one of the preceding claims, further comprising a transmission focusing unit (240) which is arranged to focus the waves emitted by the transmission unit, in particular to focus them on a point or area of the wind turbine rotor blade.

11. A wind turbine (100) with a measuring system (200) according to one of claims 1-10.

12. The wind turbine (100) according to claim 11, wherein the transmitter unit (210) and the receiver unit (220) of the measuring system (200) are mounted on a tower (102) or a nacelle (104) of the wind turbine (100).

13. The wind turbine (100) according to claim 12, which further comprises an adjusting unit which is arranged to move the transmitting unit (210) and the receiving unit (210) along the tower (102) in the vertical direction and/or the azimuth direction.

14. A method for detecting ice build-up on a wind turbine rotor blade (108), comprising
- Emitting waves, in particular sound waves and/or electromagnetic waves, to the wind turbine rotor blade (108) at a wavelength corresponding to a lattice vibration of ice crystals,
- Receiving waves eflected from the wind turbine rotor blade (108), and
- Evaluating the reflected waves to detect ice build-up.

15. A method for operating a wind energy plant (100) according to one of claims 11 to 13, comprising attaching a transmitter unit (210) and/or a receiver unit (220) of a measuring system (200) according to one of claims 1 to 10 to a tower (102) and/or a nacelle (104) of the wind energy plant (100).

## Revendications

1. Système de mesure (200) pour identifier du givrage sur une pale de rotor d'éolienne (108), comprenant
- une unité d'émission (210) pour émettre des ondes en direction de la pale de rotor d'éolienne (108),
- une unité de réception (220) pour recevoir des ondes réfléchies au niveau de la pale de rotor d'éolienne (108), et
- une unité d'évaluation (230) pour évaluer les ondes réfléchies pour identifier du givrage,
**caractérisé en ce que**
l'unité d'émission (210) est mise au point pour émettre des ondes avec une longueur d'onde, qui correspond à une vibration réticulaire de cristaux de glace.

2. Système de mesure (200) selon la revendication 1, dans lequel l'unité d'émission (210) présente une unité d'émission acoustique pour émettre des ondes sonores et/ou une unité d'émission optique pour émettre un rayonnement électromagnétique.

3. Système de mesure (200) selon la revendication 1 ou 2, dans lequel l'unité d'évaluation (230) est mise au point pour identifier du givrage sur la base d'ondes absorbées par la pale de rotor d'éolienne (108).

4. Système de mesure (200) selon la revendication 3, dans lequel l'unité d'évaluation (230) est mise au point pour identifier du givrage sur la base d'ondes absorbées de manière sélective par des vibrations réticulaires du cristal de glace.

5. Système se mesure (200) selon la revendication 4, dans lequel l'unité d'évaluation (230) est mise au point pour identifier du givrage par comparaison de l'absorption entre de la glace et de l'eau.

6. Système de mesure (200) selon la revendication 4 ou 5, dans lequel l'unité d'évaluation (230) est mise au point pour identifier du givrage sur la base d'ondes des longueurs d'onde dans la plage de 1 µm à 100 µm, en particulier de 2 µm à 50 µm et de manière particulièrement préférée d'environ 3 µm et/ou d'environ 25 µm.

7. Système de mesure (200) selon l'une quelconque des revendications précédentes, dans lequel l'unité d'évaluation (230) est mise au point pour définir un temps de propagation entre l'émission de l'onde et la réception de l'onde réfléchie.

8. Système de mesure (200) selon l'une quelconque des revendications précédentes, dans lequel l'unité d'évaluation (230) est en outre mise au point pour détecter une épaisseur de couche du givrage.

9. Système de mesure (200) selon l'une quelconque des revendications précédentes, dans lequel l'unité d'émission (210) et l'unité de réception (220) sont mises au point pour être montées au niveau d'un point ne tournant pas avec le rotor, en particulier d'une tour (102) ou d'une nacelle (104) de l'éolienne.

10. Système de mesure (200) selon l'une quelconque des revendications précédentes, qui présente par ailleurs une unité de concentration d'émission (240), qui est mise au point pour concentrer les ondes émises par l'unité d'émission, en particulier sur un point ou une zone de la pale d'éolienne.

11. Éolienne (100) avec un système de mesure (200) selon l'une quelconque des revendications 1 à 10.

12. Éolienne (100) selon la revendication 11, dans laquelle l'unité d'émission (210) et l'unité de réception (220) du système de mesure (200) sont montées au niveau d'une tour (102) ou d'une nacelle (104) de l'éolienne (100).

13. Éolienne (100) selon la revendication 12, qui présente en outre une unité d'ajustement, qui est mise au point pour déplacer l'unité d'émission (210) et l'unité de réception (210) le long de la tour (102) dans le sens de la hauteur et/ou le sens azimutal.

14. Procédé pour identifier du givrage au niveau d'une pale de rotor d'éolienne (108), comprenant
- l'émission d'ondes, en particulier d'ondes sonores et/ou d'ondes électromagnétiques, sur la pale de rotor d'éolienne (108) avec une longueur d'onde, qui correspond à une vibration réticulaire de cristaux de glace,
- la réception d'ondes réfléchies au niveau de la pale de rotor d'éolienne (108), et
- l'évaluation des ondes réfléchies pour identifier du givrage.

15. Procédé pour faire fonctionner une éolienne (100) selon l'une quelconque des revendications 11 à 13, comprenant une installation d'une unité d'émission (210) et/ou d'une unité de réception (220) d'un système de mesure (200) selon l'une quelconque des revendications 1 à 10 au niveau d'une tour (102) et/ou d'une nacelle (104) de l'éolienne (100).
